# EUROPEAN PATENT APPLICATION

(11) **EP 1 134 127 A2**
(43) Date of publication of application: **19.09.2001**
(21) Application number: 01500068.0
(22) Date of filing: 14.03.2001
(51) Int. Cl.: B60R 21/01, G01C 9/12

(54) **Digital inclination gauge for motorcycles**

(30) Priority: 14.03.2000 ES 200000620
(71) Applicant: Dominguez Luna, Marcos Antonio, Sanlucar de Barrameda, 11540 Cadiz (ES)
(72) Inventor: Dominguez Luna, Marcos Antonio, Sanlucar de Barrameda, 11540 Cadiz (ES)
(74) Representative: Maldonado Jordan, Julia

(57) **Abstract**

This invention is a digital inclination gauge for motorcycles, and it is intended for use on all types of mopeds and motorcycles, regardless of their cubic capacity. The device consists of an electronic instrument, to be attached to a motorcycle or moped, which enables the motorcyclist to know the inclination of the vehicle when going round a bend and thus establish a safety margin for the side roll in order to prevent the rider from falling off. The main elements are: tiltmeter (6), visual indicator (4), acoustic indicator (5), electronic data processing unit (7), electronic data and coefficient storage unit (8) and a relay for cutting off the current (9). Together with a voltage converter stabiliser (2). Some of the elements can be grouped together in one single unit.

## Description

This invention is a digital inclination gauge for motorcycles, and it is intended for use on all types of mopeds and motorcycles, regardless of their cubic capacity. Up to the present time no motorcycles have been equipped with a device that is similar to the one described.

### DESCRIPTION OF THE INVENTION

The object of the digital inclination gauge for motorcycles is to improve safety and prevent motorcycle accidents, particularly on stretches with bends on main roads, dual carriageways and motorways, where motorcyclists lean to one side with their vehicles.

Therefore, in view of the fact that it analyses such factors as the weight of the motorcycle, the motorcyclist and his/her luggage, speed, the grip on the road surface, and the inclination of the vehicle with respect to the vertical axis, etc., it gives the motorcyclist an audio-visual warning that the vehicle is taking the bend at an excessive angle, always taking into account that this device operates within certain safety ranges, so that this warning is given before the actual risk of falling takes place, in order to make the motorcyclist aware of the fact that he/she has come dangerously close to the real limit.

When the motorcycle leans to the right or left of vertical, a tiltmeter detects this and sends the information to a data processing unit, which processes this information together with other factors (weight, load, speed, grip, etc.) and sends this data to the motorcyclist in the form of a visual indicator (digital or liquid crystal display).

When the angle of inclination is dangerous and lies within the aforementioned safety limit, an acoustic signal made by a two-tone acoustic indicator is also heard. If the motorcyclist were to come off the motorcycle and the latter ended up lying on the ground, the tiltmeter and the data processing unit would record this, and a relay would cut off the supply to the engine.

### BRIEF DESCRIPTION OF THE DRAWINGS

A block diagram is enclosed with the description contained in this report, with a view to making it easier to understand. By way of example, this diagram shows the components contained in the object of the invention, taking into account the fact that a variety of electronic circuits and integration devices can be used to interconnect its constituent parts, leading to a variety of arrangements where the layout is concerned.

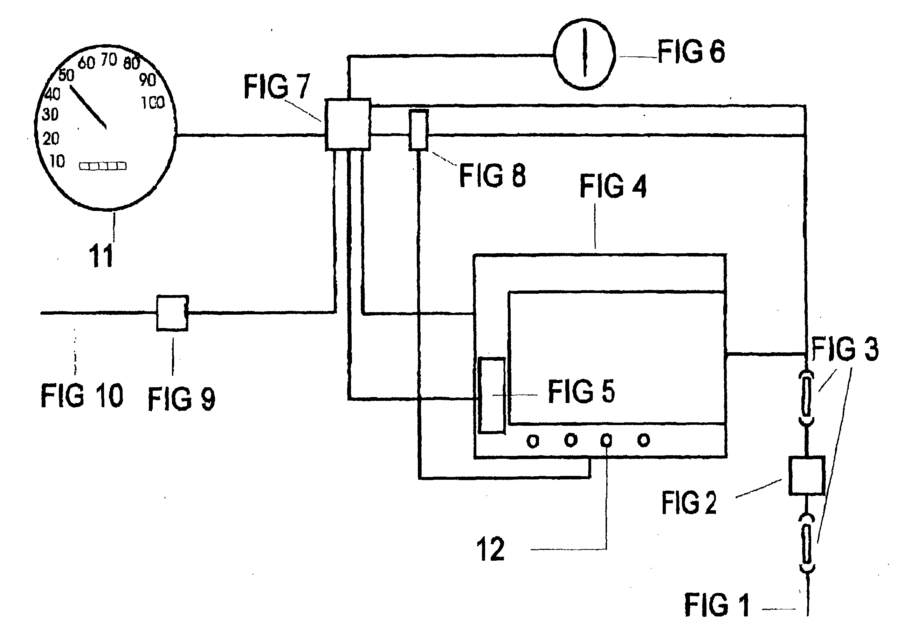

In this diagram, Figure 1 shows the electrical power supply cable running from the motorcycle generator or alternator, which provides 5 volts to operate the device that is the object of the invention.

Figure 2 shows a voltage converter stabiliser.

Figure 3 shows fuses, which are used to protect the device in the event of overvoltage.

Figure 4 is the digital or liquid crystal display mounted on the handlebars of the vehicle, which serves as the visual indicator seen by the motorcyclist.

Figure 5 shows the two-tone acoustic indicator, which is mounted on the casing that supports the digital display.

Figure 6 shows the magnetic needle, which oscillates depending on the vertical plane, whose position indicates the motorcycle's angle of inclination.

Figure 7 shows the data processing unit or microprocessor.

Figure 8 shows the data storage unit.

Figure 9 shows a relay, which cuts off the current.

Figure 10 shows the power supply cable to the engine.

The rest of the lines that connect up the elements described here are connection buses.

### DESCRIPTION OF A PREFERRED EMBODIMENT

The digital inclination gauge consists of the following basic elements:

Tiltmeter Figure 6, visual indicator Figure 4, acoustic indicator Figure 5, electronic data processing unit Figure 7, electronic data and coefficient storage unit Figure 8 and a relay for cutting off the current Figure 9. Together with a voltage converter stabiliser Figure 2. Some of the elements can be grouped together in one single unit. Therefore, the tiltmeter, the data processing and storage unit and the visual and acoustic indicators could be built into one single device in order to improve operation and for the purpose of simplification, and this device could be mounted on the handlebars, next to the speedometer 11. What the motorcyclist sees is the visual indicator graph, incorporated into the unit, as explained above, and this will be of the virtual type.

The speedometer will be joined to the data processing unit, so that the speed can be processed together with the other factors.

The visual indicator will take the form of a digital or liquid crystal display, which depicts a road disappearing into the distance showing a motorcycle as though it were running vertically along the centre of the road, leaning to the right or to the left at the same angle as the motorcycle that it is installed on.

The whole display lights up in white when the headlight is turned on to full beam or dipped, and the buttons (12) for selecting the different options for the virtual model also light up; these buttons are for the following options: dry or wet asphalt, unsurfaced sand track, other circuits, etc., or whether one or two people are riding on the vehicle.

When the motorcycle is leaning over too far and within the safety zone, the digital display will flash on and off in red, to warn that there is a potential risk of a fall, and an acoustic signal will be heard, and all of this will cease at the same time when the safety zone is left, when the motorcycle tends to go back to the vertical position.

The materials used to manufacture its components, and their size, as well as all the details concerning the accessories that might be used, are beyond the scope of the object of the invention, as long as they do not affect its essential nature.

## Claims

1. A digital inclination gauge for motorcycles consisting of an electronic instrument, to be attached to a motorcycle or moped, which enables the motorcyclist to know the inclination of the vehicle when going round a bend and thus establish a safety margin for the side roll in order to prevent the rider from falling off. Its main electronic elements are as follows: Tiltmeter Figure 6, electronic data processing unit Figure 7, electronic data and coefficient storage unit Figure 8 and a relay for cutting off the current Figure 9, visual indicator Figure 4, acoustic indicator Figure 5, together with a voltage converter stabiliser Figure 2 that, either joined together or forming part of one single unit, is **characterised by** the fact that it uses some variants for the motorcycle that it is installed on and other external variants regarding the road the vehicle is running on, the weight and load on the motorcycle and the speed at which the vehicle is travelling at any particular time; this information is passed on to the motorcyclist, who is thus warned about the potential risk that he/she is being exposed to, if he/she has entered the safety margin set by the device that, in the event of a fall, sends an electronic signal that cuts off the supply to the engine, thereby preventing any risk of fire.

2. A digital inclination gauge for motorcycles consisting of a tiltmeter Figure 6, which is **characterised in that** it is consists of a magnetic needle that can oscillate around an axis, depending on the vertical plane, the needle remaining balanced (vertical) if the motorcycle is also vertical; if the motorcycle is leaning to either side of the vertical position, the tiltmeter will record this position, thus managing to detect the variations in the angle of inclination of the motorcycle that it is mounted on, and it sends this information to the data processing unit by means of a sensor that detects the changes in the needle's position.

3. A digital inclination gauge for motorcycles consisting of one data processing unit Figure 7, **characterised in that** it is an electronic unit capable of processing data and coefficients with respect to the motorcycle's speed at any particular moment, its angle of inclination (to the right or to the left), the number of riders, the load and the vehicle's grip on each different type of road surface.

4. A digital inclination gauge for motorcycles consisting of a relay Figure 9, **characterised by** the fact that the current to the engine is cut off, in order to stop the motor from running if the motorcyclist has a fall and the motorcycle ends up lying on the ground. This device is activated when the tiltmeter records such an occurrence and the data processing unit trips the relay, by means of a certain electrical signal.

5. A digital inclination gauge for motorcycles consisting of a visual indicator Figure 4, **characterised in that** it lets the motorcyclist know the variations that the tiltmeter is subjected to on the basis of the calculations handled by the data processing unit, by displaying the latter, which is mounted next to the speedometer 11, on the motorcycle handlebars.
It is planned that, depending on the models, the inclination indicator for motorcycles could be equipped either with a normal or a virtual gauge, on the basis of the complexity involved, and the normal and virtual gauges would have the following characteristics:
NORMAL: consisting of a digital display or display of another type, depicting a motorcycle in the centre that appears to be running along a road stretching out towards the horizon. For this option the data storage unit memorises the grip coefficient for the tyres as recommended by the manufacturer, for the different states and types of road surface (dry and wet asphalt, unsurfaced sand track, different circuits, etc.) and the average load on the vehicle, all of which will be processed, and the safety margin for the inclination to the left or right will automatically be established at each bend.
VIRTUAL: consisting of the same elements as the normal one, except for the fact that it is equipped with some buttons (12) that provide the data processing unit with specific information about the aforementioned variants. For this type of gauge, the information that is sent to the processor when the buttons are pressed will be memorised in the electronic data storage unit beforehand. Therefore, these buttons will enable the motorcyclist to choose the right option when riding, and this can be modified while riding if any of the circumstances change.
Thus, if there is only ONE person riding on the motorcycle, a weight that ranges from 70 to 120 kilos will be set in the memory, and if there are TWO people on the motorcycle, a total weight ranging from 120 to 220 kilos will be set, these figures being for guidance purposes. The user will press the button for ONE rider if only he/she and his/her luggage are on the motorcycle and he/she calculates that the combined weight does not exceed 120 kilos, but if this combined weight does exceed 120 kilos then the TWO rider button will be pressed.

6. A digital inclination gauge for motorcycles consisting of an acoustic indicator Figure 5, **characterised by** being a device that gives a two-tone acoustic signal that is heard when the motorcycle is leaning excessively and has reached the established safety zone or threshold, before the rider and motorcycle fall.

7. A digital inclination gauge for motorcycles consisting of an electronic data storage unit or memory Figure 8, in which the aforementioned data and coefficients are recorded and sent to the electronic data processing unit.
